# FASCICULE DE BREVET EUROPEEN

(11) **EP 2 970 635 B1**
(45) Date de publication et mention de la délivrance du brevet: **07.06.2017**
(21) Numéro de dépôt: 14715352.2
(22) Date de dépôt: 10.03.2014
(51) Int. Cl.: C08K 5/5313, D06M 13/285, D06M 15/263, C08L 33/12

(54) **SIROP (METH) ACRYLIQUE LIQUIDE D'IMPREGNATION D'UN SUBSTRAT FIBREUX, PROCEDE D'IMPREGNATION D'UN SUBSTRAT FIBREUX, MATERIAU COMPOSITE OBTENU APRES POLYMERISATION DUDIT SUBSTRAT PRE-IMPREGNE**
FLÜSSIG(METH)ACRYLSIRUP ZUM IMPRÄGNIEREN EINES FASERSUBSTRATS, VERFAHREN ZUM IMPRÄGNIEREN EINES FASERSUBSTRATS UND NACH DER POLYMERISATION DIESES VORIMPRÄGNIERTEN SUBSTRATS HERGESTELLTER VERBUNDWERKSTOFF
LIQUID (METH)ACRYLIC SYRUP FOR IMPREGNATING A FIBROUS SUBSTRATE, METHOD OF IMPREGNATING A FIBROUS SUBSTRATE, COMPOSITE MATERIAL OBTAINED FOLLOWING POLYMERISATION OF THE PRE-IMPREGNATED SUBSTRATE

(30) Priorité: 11.03.2013 FR 1352157
(43) Date de publication de la demande: 20.01.2016
(73) Titulaire: Arkema France, 92700 Colombes (FR); Le Pole De Plasturgie De L'Est, 57506 Saint Avold (FR); Université de Lorraine, 54052 Nancy Cedex (FR)
(72) Inventeur: GERARD, Pierre, F-64230 Denguin (FR); GLOTIN, Michel, F-92210 Saint-Cloud (FR); CAUCHOIS (POLE PLASTURGIE DE L'EST), Jean-Pierre, F-67510 Obersteinbach (FR); QUINTEN, Claire, F-57150 Creutzwald (FR); MIHALUTA, Marius, F-57800 Freyming-Merlebach (FR); LIN, Qing, F-57000 Metz (FR); FERRIOL, Michel, F-57500 Saint-Avold (FR); COCHEZ, Marianne, Pontpierre 57380 (FR)
(86) Numéro de dépôt international: PCT/FR2014/050538
(87) Numéro de publication internationale: WO 2014/140465

(56) Documents cités:
- FR-A1- 2 791 353
- DATABASE WPI Week 200731 Thomson Scientific, London, GB; AN 2007-326993 XP002716781, & WO 2007/007663 A1 (POLYPLASTICS KK) 18 janvier 2007 (2007-01-18)
- DATABASE WPI Week 201110 Thomson Scientific, London, GB; AN 2010-P81490 XP002716782, & KR 100 994 923 B1 (PROCAM CO LTD) 19 novembre 2010 (2010-11-19)

## Description

### [Domaine de l'invention]

La présente invention concerne un sirop (méth)acrylique liquide d'imprégnation d'un substrat fibreux.

Plus particulièrement, l'invention concerne un sirop liquide (méth)acrylique visqueux contenant principalement des composants méthacryliques ou acryliques et une substance ignifugeante destinée à améliorer la résistance au feu d'une matrice thermoplastique obtenue après polymérisation du sirop. L'invention concerne en outre un procédé d'imprégnation d'un substrat fibreux ou de fibres longues avec ledit sirop liquide visqueux. L'invention concerne également un substrat fibreux pré-imprégné avec ledit sirop qui est utile pour la fabrication de pièces composites.

La présente invention concerne également un procédé de fabrication de pièces mécaniques ou éléments structurels en matériau composite et des pièces mécaniques ou éléments structurels en matériau composite obtenues par ce procédé.

### [Art antérieur]

Les pièces mécaniques qui doivent tenir des contraintes élevées pendant leur utilisation, sont largement fabriquées à partir de matériaux composites. Un matériau composite est une combinaison macroscopique de deux matériaux non miscibles ou plus. Le matériau composite est constitué par au moins un matériau qui forme la matrice, c'est-à-dire une phase continue assurant la cohésion de la structure, et un matériau de renfort.

L'objectif, lors de l'utilisation d'un matériau composite, est d'obtenir des performances qui ne sont pas disponibles avec chacun de ses constituants lorsqu'ils sont utilisés séparément. Par conséquent, des matériaux composites sont largement utilisés dans plusieurs secteurs industriels tels que par exemple la construction, l'automobile, l'aérospatial, les transports, les loisirs, l'électronique et le sport, notamment en raison de leurs meilleures performances mécaniques (résistance à la traction supérieure, module de traction supérieur, ténacité à la rupture supérieure) et de leur faible densité, en comparaison des matériaux homogènes.

La classe la plus importante, au regard du volume à l'échelle industrielle commerciale, est celle des composites à matrices organiques, dans lesquels le matériau de matrice est généralement un polymère. La matrice d'un matériau composite polymère est soit un polymère thermoplastique, soit un polymère thermodurcissable.

Les polymères thermodurcissables consistent en des structures tridimensionnelles réticulées. La réticulation est obtenue par cuisson de groupes réactifs dans un pré-polymère. La cuisson peut par exemple être obtenue par chauffage des chaînes polymères afin de réticuler et de durcir le matériau de manière permanente. Afin de préparer le matériau composite polymère, un pré-polymère est mélangé avec l'autre composant, tel que des billes ou fibres de verre, ou l'autre composant est mouillé ou imprégné et cuit ultérieurement. Des exemples de prépolymères ou de matériau de matrice pour polymères thermodurcissables sont les polyesters insaturés, les esters de vinyle, les matériaux époxy ou phénoliques.

Un inconvénient majeur d'une matrice polymère thermodurcissable est sa réticulation. La matrice ne peut pas facilement être façonnée en d'autres formes. Une fois le polymère réticulé, la forme est fixée. Ceci rend également difficile le recyclage du matériau composite thermodurcissable et des pièces ou articles mécaniques ou structurés fabriqués comprenant ledit matériau composite thermodurcissable, qui sont brûlés dans une cimenterie ou jetés dans une décharge.

Pour permettre le thermoformage et le recyclage, on préfère utiliser les polymères thermoplastiques.

Les polymères thermoplastiques consistent en des polymères linéaires ou ramifiés qui ne sont pas réticulés. Les polymères thermoplastiques sont chauffés afin de mélanger les constituants nécessaires pour la fabrication du matériau composite et sont refroidis pour figer la forme finale. Le problème de ces polymères thermoplastiques fondus est leur viscosité très importante. Afin de préparer un matériau composite polymère à base de polymère thermoplastique, une résine polymère thermoplastique, communément appelée « sirop », est utilisée pour imprégner le matériau de renfort, par exemple un substrat fibreux. Une fois polymérisé, le sirop polymère thermoplastique constitue la matrice du matériau composite. Au moment de l'imprégnation, la viscosité du sirop d'imprégnation doit être maitrisée et adaptée pour ne pas être trop fluide ou trop visqueuse, de manière à imprégner correctement chaque fibre du substrat fibreux. Lorsque le mouillage est partiel, selon que le sirop est trop fluide ou trop visqueux, il apparait respectivement des zones « à nu », c'est-à-dire non imprégnées, et des zones où il se forme des gouttes de polymère sur les fibres qui sont à l'origine de la création de bulles. Ces zones « à nu » et ces bulles engendrent l'apparition de défauts dans le matériau composite final qui sont à l'origine, entre autre, d'une perte de résistance mécanique du matériau composite final. Un sirop répondant à ce problème a été mis au point par la Demanderesse et est décrit dans les demandes de brevet non encore publiées FR N° FR1159553, ou son extension PCT WO2013/056845 et dans la demande de brevet N° FR1256929 ou son extension PCT WO2014/013028.

D'autre part, la législation impose de plus en plus que les matériaux soient ignifugés, notamment dans les secteurs du bâtiment ou du ferroviaire. Les matériaux utilisés dans les espaces publics, surtout s'ils sont confinés, doivent donc tenir aux tests de contrainte au feu. D'autre part, les contraintes liées à l'environnement imposent également que les formulations ignifuges ne contiennent pas d'halogène car, lors de la combustion, des agents ignifugeants halogénés et des gaz acides et toxiques risquent d'être libérés.

L'ajout d'agent(s) ignifugeant(s) ne doit cependant pas perturber la viscosité du sirop d'imprégnation, afin d'imprégner correctement chaque fibre du substrat fibreux et éviter l'apparition de défauts dans le matériau composite final. L'ajout de tel(s) agent(s) ignifugeant(s) ne doit pas non plus altérer les propriétés thermoplastiques du matériau composite obtenu après polymérisation du substrat fibreux pré-imprégné.

La demande US 2005/0143503 décrit un agent ignifugeant sous forme de particules agglomérées. Les particules sont constituées de 99,99 à 80% d'un (di)phosphinate et de 0,01 à 20% d'un liant polymère qui peut être à base d'acrylates.

La demande internationale WO 2005/061606 décrit l'ignifugation d'un polymère thermoplastique par un mélange d'un composé (F1) semblable au composé phosphinate de formule (I) qui est utilisé dans la présente invention, d'un composé (F2) qui est un produit de réaction entre l'acide phosphorique et la mélamine et/ou un produit de réaction entre l'acide phosphorique et un dérivé de condensation de la mélamine et d'un composé (F3) qui est un dérivé de condensation de la mélamine.

Les brevets DE 2447727 et DE 2252258 décrivent respectivement des polyamides ou des polyesters ignifugés à l'aide de (di)phosphinates.

La demande EP 1013713 décrit une structure multicouche comprenant une couche d'une composition méthacrylique ignifugée à l'aide d'un composé halogéné et une couche d'un polymère thermoplastique, comme le PVC. FR2791353 divulgue une composition ignifugeante pour matériaux composites en fibre de verre, ladite composition étant caractérisée par une viscosité Brookfield inférieure à 6000 mPas, comprend une résine acrylique, un plastifiant et une composition intumescente comprenant un polyphosphate.

Dans aucun de ces documents, il n'est suggéré que l'incorporation, dans un sirop (méth)acrylique liquide d'imprégnation, de substance(s) ignifugeante(s) choisie(s) parmi des dérivés phosphorés ou des charges minérales hydratées, avec une teneur globale d'au plus 50% en poids, permet d'obtenir un sirop présentant une viscosité optimale pour imprégner correctement les fibres d'un substrat fibreux et permet d'obtenir, après polymérisation du sirop, un matériau composite thermoplastique ignifugé sans halogène, résistant au feu et dont les propriétés thermoplastiques sont conservées.

### [PROBLEME TECHNIQUE]

L'invention a donc pour but de remédier à au moins un des inconvénients de l'art antérieur.

L'invention vise notamment à proposer une pièce mécanique en matériau composite thermoplastique présentant une résistance au feu telle, que le matériau composite ait une valeur d'indice d'oxygène limite (IOL) supérieure à 32, préférablement supérieure à 40 et avantageusement supérieure à 45.

L'invention vise aussi à proposer une pièce mécanique en matériau composite thermoplastique présentant une résistance au feu telle, que le matériau composite ait des valeurs, mesurées au cours d'un test de cône calorimètre, de pHRR (acronyme anglais pour « peak rate of heat release », pic de débit calorifique) et THR (acronyme anglais pour « total heat released », quantité totale de chaleur dégagée ) les plus faibles possibles, et de TTI (acronyme anglais pour « time to ignition », temps d'ignition) et TOF (acronyme anglais pour « time of flame-out », le temps d'extinction) les plus grandes possibles. Le taux de fumées et les quantités de CO et CO₂ doivent également être les plus faibles possibles.

L'invention vise en outre à mouiller complètement, correctement et de manière homogène le substrat fibreux pendant l'imprégnation. Tout défaut du mouillage des fibres par exemple par des bulles et des vides diminue les performances mécaniques de la pièce composite finale.

Un autre objectif de la présente invention est de proposer un procédé qui peut être réalisé à faible coût et qui permet une fabrication, à l'échelle industrielle, de pièces mécaniques ou éléments structurel en matériau composite thermoplastique. Par ailleurs, le procédé doit être facile et simple à mettre en oeuvre en utilisant des composés disponibles dans le commerce. La fabrication des pièces composites doit également être reproductible et rapide, ce qui signifie des temps de cycle courts.

### [BREVE DESCRIPTION DE L'INVENTION]

De manière surprenante, il a été découvert qu'un sirop (meth)acrylique liquide d'imprégnation d'un substrat fibreux, ledit substrat fibreux étant constitué de fibres longues, ledit sirop étant caractérisé en ce qu'il comprend :
a)un polymère (méth)acrylique,
b)un monomère (méth)acrylique,
c)au moins une substance ignifugeante choisie parmi :
   - des additifs dérivés phosphorés tels que des phosphinates, des diphosphinates, des phosphonates, des phosphates, du phosphore rouge, des polyphophates d'ammonium ayant un nombre de motifs n d'au moins 1000,
   - des charges minérales hydratées telles que des hydroxydes métalliques,
la teneur globale en substance ignifugeante dans ledit sirop (méth)acrylique liquide étant inférieure à 50 % en poids, de préférence inférieure à 30, ledit sirop (méth)acrylique liquide ayant une viscosité dynamique comprise entre 10 mPa*s et 10 000 mPa*s, de préférence entre 50 mPa*s et 5 000 mPa*s et avantageusement entre 100 mPa*s et 1 000 mPa*s, fournit une imprégnation complète et correcte du substrat fibreux et une très bonne résistance au feu après polymérisation.

De manière surprenante, la demanderesse a également découvert qu'un procédé d'imprégnation pour l'imprégnation d'un substrat fibreux, ledit substrat fibreux étant constitué de fibres longues et ledit procédé comprenant une étape d'imprégnation dudit substrat fibreux avec ledit sirop (méth)acrylique liquide d'imprégnation, fournit une imprégnation complète et correcte du substrat fibreux.

Étonnamment, il a en outre été découvert qu'un procédé de fabrication de pièces composites comprenant les étapes suivantes :
a) l'imprégnation d'un substrat fibreux avec un tel sirop (méth)acrylique liquide,
b) la polymérisation du sirop (méth)acrylique liquide imprégnant ledit substrat fibreux,
permet d'obtenir des pièces composites thermoplastiques présentant des propriétés de résistance au feu significativement améliorées et telles que les pièces en matériau composite ont une valeur d'indice d'oxygène limite (IOL) supérieure à 32, préférablement supérieure à 40 et avantageusement supérieure à 45, des valeurs de pHRR et THR les plus faibles possibles, et de TTI et TOF les plus grandes possibles.

Par ailleurs, il a également été découvert qu'une pièce composite obtenue par le procédé de fabrication, possédant une résistance au feu significativement améliorée, ne contient presque pas de défauts tels que des vides entre le substrat fibreux et le polymère (méth)acrylique.

### [DESCRIPTION DETAILLEE]

Selon un premier aspect, la présente invention concerne un sirop (méth)acrylique liquide d'imprégnation d'un substrat fibreux, ledit substrat fibreux étant constitué de fibres longues et ledit sirop étant caractérisé en ce qu'il comprend:
a)un polymère (méth)acrylique,
b)un monomère (méth)acrylique,
c)au moins une substance ignifugeante choisie parmi :
   - des additifs dérivés phosphorés tels que des phosphinates, des diphosphinates, des phosphonates, des phosphates, du phosphore rouge, des polyphophates d'ammonium ayant un nombre de motifs n d'au moins 1000,
   - des charges minérales hydratées telles que des hydroxydes métalliques,
la teneur globale en substance ignifugeante dans ledit sirop (méth)acrylique liquide étant inférieure à 50 % en poids, de préférence inférieure à 30 %, ledit sirop (méth)acrylique liquide ayant une viscosité dynamique comprise entre 10 mPa*s et 10 000 mPa*s, de préférence entre 50 mPa*s et 5 000 mPa*s et avantageusement entre 100 mPa*s et 1 000 mPa*s.

Le terme « substrat fibreux » tel qu'utilisé se rapporte à des tissus, des feutres ou des non-tissés qui peuvent être sous la forme de bandes, de nappes, de tresses, de mèches ou de pièces.

Le terme « (méth)acrylique » tel qu'utilisé se rapporte à tout type de monomères acryliques et méthacryliques.

Le terme « PMMA » tel qu'utilisé se rapporte aux homo- et copolymères de méthacrylate de méthyle (MMA), le rapport en poids de MMA dans le PMMA étant d'au moins 70 % en poids pour le copolymère de MMA.

Le terme « monomère » tel qu'utilisé se rapporte à une molécule qui peut subir une polymérisation.

Le terme « polymérisation tel qu'utilisé se rapporte au procédé de transformation d'un monomère ou d'un mélange de monomères en un polymère.

Le terme « polymère thermoplastique » tel qu'utilisé se rapporte à un polymère qui se transforme en un liquide ou devient plus liquide ou moins visqueux lorsqu'il est chauffé et qui peut prendre de nouvelles formes par l'application de chaleur et de pression.

Le terme « polymère thermodurcissable » tel qu'utilisé se rapporte à un prépolymère à un état souple, solide ou visqueux qui se transforme de manière irréversible en un réseau polymère insoluble et infusible par cuisson.

Le terme « composite polymère » tel qu'utilisé se rapporte à un matériau multicomposant comprenant plusieurs domaines de phase différents, parmi lesquels au moins un type de domaine de phase est une phase continue et dans lequel au moins un composant est un polymère.

Le terme «substance ignifugeante » tel qu'utilisé se rapporte à une substance, additif ou charge, apte à retarder l'inflammation d'un matériau afin d'améliorer sa tenue au feu.

Concernant la pièce composite, il s'agit d'un panneau, d'un couvercle ou d'une coque constitué d'un matériau composite ou de pièces pour avions, pour bateaux (coque et pont), véhicules de chemin de fer (trappe, cloison, caisse) et de pièces automobiles (carrosserie, capot, porte).

Le sirop (méth)acrylique liquide selon l'invention, destiné à imprégner le substrat fibreux, comprend notamment un monomère (méth)acrylique ou un mélange de monomères (méth)acryliques, un polymère (méth)acrylique et au moins une substance ignifugeante destinée à retarder l'inflammation de la matrice polymère thermoplastique obtenue après polymérisation du sirop.

**En ce qui concerne le monomère (méth)acrylique,** le monomère est choisi parmi l'acide acrylique, l'acide méthacrylique, les monomères acryliques d'alkyle, les monomères méthacryliques d'alkyle, les monomères acryliques d'hydroxyalkyle, les monomères méthacryliques d'hydroxyalkyle et leurs mélanges.

De préférence, le monomère est choisi parmi l'acide acrylique, l'acide méthacrylique, les monomères acryliques d'hydroxyalkyle, les monomères méthacryliques d'hydroxyalkyle, les monomères acryliques d'alkyle, les monomères méthacryliques d'alkyle et leurs mélanges, le groupe alkyle contenant de 1 à 22 carbones, linéaires, ramifiés ou cycliques ; le groupe alkyle contenant de préférence 1 à 12 carbones, linéaires, ramifiés ou cycliques.

Avantageusement, le monomère (méth)acrylique est choisi parmi le méthacrylate de méthyle, le méthacrylate d'éthyle, l'acrylate de méthyle, l'acrylate d'éthyle, l'acide méthacrylique, l'acide acrylique, l'acrylate de n-butyle, l'acrylate d'isobutyle, le méthacrylate de n-butyle, le méthacrylate d'isobutyle, l'acrylate de cyclohexyle, le méthacrylate de cyclohexyle, l'acrylate d'isobornyle, le méthacrylate d'isobornyle, l'acrylate d'hydroxyethyle, le méthacrylate d'hydroxyethyle et leurs mélanges.

Plus avantageusement, le monomère (méth)acrylique est choisi parmi le méthacrylate de méthyle, l'acrylate d'isobornyle ou l'acide acrylique et leurs mélanges.

Selon un mode de réalisation préféré, au moins 50 % en poids, de préférence au moins 60 % en poids du monomère est le méthacrylate de méthyle.

Selon un mode de réalisation davantage préféré, au moins 50 % en poids, de préférence au moins 60 % en poids, de manière davantage préférée au moins 70 % en poids et avantageusement au moins 80 % en poids et encore plus avantageusement 90 % en poids du monomère est un mélange de méthacrylate de méthyle avec de l'acrylate d'isobornyle et/ou de l'acide acrylique.

**En ce qui concerne le polymère (méth)acrylique,** on peut mentionner les polyméthacrylates d'alkyle ou les polyacrylates d'alkyle. Selon un mode de réalisation préféré, le polymère (méth)acrylique est le polyméthacrylate de méthyle (PMMA).

Le terme « PMMA » désigne un homopolymère ou copolymère de méthacrylate de méthyle (MMA) ou leurs mélanges.

Selon un mode de réalisation, l'homo- ou le copolymère de méthacrylate de méthyle (MMA) comprend au moins 70 %, de préférence au moins 80 %, avantageusement au moins 90 % et plus avantageusement au moins 95 % en poids de méthacrylate de méthyle.

Selon un autre mode de réalisation, le PMMA est un mélange d'au moins un homopolymère et d'au moins un copolymère de MMA, ou un mélange d'au moins deux homopolymères ou deux copolymères de MMA ayant un poids moléculaire moyen différent, ou un mélange d'au moins deux copolymères de MMA ayant une composition de monomères différente.

Le copolymère de méthacrylate de méthyle (MMA) comprend de 70 % à 99,7 % en poids de méthacrylate de méthyle et de 0,3 à 30 % en poids d'au moins un monomère contenant au moins une insaturation éthylénique qui peut copolymériser avec le méthacrylate de méthyle.

Ces monomères sont bien connus et on peut notamment mentionner les acides acrylique et méthacrylique et les (méth)acrylates d'alkyle dans lesquels le groupe alkyle contient de 1 à 12 atomes de carbone. À titre d'exemple, on peut mentionner l'acrylate de méthyle et le (méth)acrylate d'éthyle, de butyle ou de 2-éthylhexyle. De préférence, le comonomère est un acrylate d'alkyle dans lequel le groupe alkyle contient de 1 à 4 atomes de carbone.

Selon un mode de réalisation préféré, le copolymère de méthacrylate de méthyle (MMA) comprend de 80 % à 99,7 %, avantageusement de 90 % à 99,7 % et plus avantageusement de 90 % à 99,5 % en poids de méthacrylate de méthyle et de 0,3 % à 20 %, avantageusement de 0,3 % à 10 % et plus avantageusement de 0,5 % à 10 % en poids d'au moins un monomère contenant au moins une insaturation éthylénique qui peut copolymériser avec le méthacrylate de méthyle. De préférence, le comonomère est choisi parmi l'acrylate de méthyle ou l'acrylate d'éthyle ou leurs mélanges.

La masse moléculaire moyenne en poids du polymère (méth)acrylique doit être élevée, ce qui signifie supérieur à 50 000 g/mol, de préférence supérieur à 100 000 g/mol.

La masse moléculaire moyenne en poids peut être mesurée par chromatographie d'exclusion stérique (SEC en anglais).

Le polymère (méth)acrylique est complètement soluble dans le monomère (méth)acrylique ou dans le mélange de monomères (méth)acryliques. Il permet d'augmenter la viscosité du monomère (méth)acrylique ou du mélange de monomères (méth)acryliques. La solution obtenue est généralement nommée « sirop » ou « pré-polymère ». La valeur de la viscosité dynamique du sirop (méth)acrylique liquide est comprise entre de 10 mPa*s et 10 000 mPa*s, de préférence entre 50 mPa*s et 5 000 mPa*s et avantageusement entre 100 mPa*s et 1 000 mPa*s. La viscosité du sirop peut facilement être mesurée avec un rhéomètre ou un viscosimètre. La viscosité dynamique est mesurée à 25 °C. Le sirop (méth)acrylique liquide a un comportement newtonien, ce qui signifie qu'il n'y a pas de dilution sous cisaillement, de sorte que la viscosité dynamique est indépendante du cisaillement dans un rhéomètre ou de la vitesse du mobile dans un viscosimètre. Une telle viscosité du sirop obtenu permet une imprégnation correcte des fibres du substrat fibreux.

Avantageusement, le sirop (méth)acrylique liquide ne contient pas de solvant supplémentaire ajouté volontairement.

**En ce qui concerne la substance ignifugeante,** elle est choisie parmi :
- des additifs dérivés phosphorés tels que des phosphinates, des diphosphinates, des phosphonates, des phosphates, du phosphore rouge, des polyphophates d'ammonium ayant un nombre de motifs n d'au moins 1000,
- des charges minérales hydratées telles que des hydroxydes métalliques.

La teneur globale en substance (s) ignifugeante(s) dans le sirop (meth)acrylique est inférieure à 50% en poids , de préférence inférieure à 30%. Une telle teneur permet de conserver une viscosité dynamique optimale du sirop (meth)acrylique comprise entre 10 mPa*s et 10 000 mPa*s, de préférence entre 50 mPa*s et 5 000 mPa*s et avantageusement entre 100 mPa*s et 1 000 mPa*s. Une telle viscosité permet une imprégnation correcte de toutes les fibres du substrat fibreux et d'obtenir, après polymérisation du sirop, un matériau composite sans défauts.

**S'agissant des additifs dérivés phophorés,** l'agent ignifugeant est plus particulièrement choisit parmi les phosphinates ou diphosphinates présentant les formules (I) ou (II) suivantes : 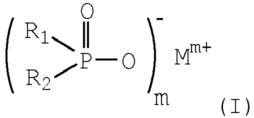 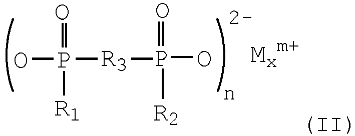 dans lesquelles :
R₁ et R₂ désignent des groupements alkyle en C₁-C₆, linéaires ou branchés et/ou aryle ;
R₃ désigne un groupement alkylène en C₁-C₁₀, linéaire ou branché, arylène en C₆-C₁₀, alkylarylène ou arylalkylène ;
M désigne Mg, Ca, Al, Sb, Sn, Ge, Ti, Zn, Fe, Zr, Ce, Bi, Sr, Mn, Li, Na, K ;
m est un entier entre 1 et 4 ;
n est un entier entre 1 et 4 ;
x est un entier entre 1 et 4.

On peut aussi combiner deux ou plusieurs agents ignifugeants de formule (I) ou (II). Avantageusement, M désigne Ca, Al ou Zn. De préférence, M désigne Al.

R₁ et R₂ sont de préférence des groupements alkyle comme par exemple des groupements méthyle, éthyle, n-propyle, isopropyle, n-butyle, tert-butyle, n-pentyle et/ou phényle.

R₃ est de préférence le groupement méthylène, éthylène, n-propylène, isopropylène, n-butylène, tert-butylène, n-pentylène, n-octylène ou n-docécylène. Il peut s'agir aussi du groupement phénylène, méthylphénylène, éthylphénylène, tert-butylphénylène, méthylnaphtylène, phényléthylène, phényléthylène, phénylpropylène ou naphtalène.

De préférence, on utilise un agent ignifugeant de formule (I) dans lequel M désigne Al et R₁ et R₂ désignent tous deux un groupement alkyle en C₁-C₆. De préférence, R₁ et R₂ sont tous deux des groupements éthyle ou bien un groupement éthyle et un groupement méthyle c'est-à-dire que l'agent ignifugeant correspond à un produit de formule (III) ou (IV) :

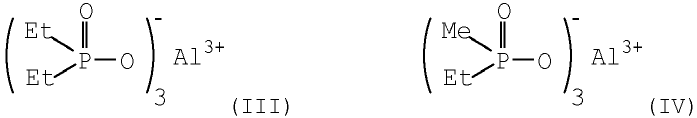

De préférence, pour obtenir une bonne dispersion dans le sirop (méth)acrylique, et une répartition homogène dans les fibres du substrat fibreux au moment de l'imprégnation, l'agent ignifugeant se présente sous forme de particules dont le diamètre moyen D₅₀ est compris entre 0,5 et 10 µm, avantageusement entre 1 et 5 µm. Ce diamètre moyen D₅₀ des particules est mesuré par granulométrie à diffraction laser, au moyen d'un instrument de la gamme Microtrac (marque déposée). Pour l'estimation du diamètre moyen des particules, on mesure le diamètre moyen en volume D₅₀ ou D(v ;0,5), qui correspond à la taille de la particule pour laquelle 50% de l'échantillon a une taille inférieure à cette taille et 50% de l'échantillon a une taille supérieure à cette taille ou, en d'autres termes, le diamètre équivalent en volume à 50% de volume cumulé. Cette taille est également appelée diamètre moyen en volume, lequel est relié au diamètre médian en masse par la masse volumique des particules, en supposant une masse volumique indépendante de la taille des particules.

De préférence, pour conserver la viscosité optimale du sirop, l'additif ignifugeant à base de phosphinates, lorsqu'il est utilisé seul, représente de 5% à 50% en poids, de préférence de 10% à 30% en poids, et avantageusement de 15% à 25% en poids du sirop (méth)acrylique.

**S'agissant des charges minérales hydratées,** ce sont essentiellement des hydroxydes métalliques, qui se présentent plus particulièrement sous forme de trihydate d'alumine (Al(OH)₃) ou d'hydroxyde de magnésium (Mg(OH)). De préférence, il s'agit du trihydrate d'alumine (Al(OH)₃).

Les hydroxydes métalliques subissent une déshydratation endothermique lors de leur dégradation thermique. La libération d'eau refroidit le matériau composite et dilue les gaz dans la zone des flammes, provoquant ainsi un retard à l'inflammation. De plus, à l'issue de leur dégradation thermique, il se forme dans le matériau composite, une couche d'oxyde métallique Al₂O ou MgO qui joue un rôle de bouclier thermique.

De préférence, pour obtenir une bonne dispersion dans le sirop (méth)acrylique, et une répartition homogène dans les fibres du substrat fibreux au moment de l'imprégnation, l'hydroxyde métallique ignifugeant se présente sous forme de particules dont le diamètre moyen D₅₀ est compris entre 0,5 et 10 µm, avantageusement entre 1 et 5 µm. Ce diamètre moyen D₅₀ des particules est mesuré par granulométrie à diffraction laser, au moyen d'un instrument de la gamme Microtrac (marque déposée). Pour l'estimation du diamètre moyen des particules, on mesure le diamètre moyen en volume D₅₀ ou D(v ;0,5), qui correspond à la taille de la particule pour laquelle 50% de l'échantillon a une taille inférieure à cette taille et 50% de l'échantillon a une taille supérieure à cette taille ou, en d'autres termes, le diamètre équivalent en volume à 50% de volume cumulé. Cette taille est également appelée diamètre moyen en volume, lequel est relié au diamètre médian en masse par la masse volumique des particules, en supposant une masse volumique indépendante de la taille des particules.

De préférence, pour conserver la viscosité optimale du sirop, les charges ignifugeantes à base d'hydroxyde métallique, lorsqu'elles sont utilisées seules, c'est-à-dire sans autre additif ignifugeant, représente de 5% à 50% en poids, de préférence de 10% à 50% en poids, et avantageusement de 10% à 30% en poids ou de 30% à 50% en poids et plus avantageusement de 15% à 25% en poids du sirop (méth)acrylique.

Les additifs ignifugeants ou les charges ignifugeantes peuvent être utilisés seuls ou en combinaison dans le sirop (méth)acrylique. La teneur globale de ces substances dans le sirop (méth)acrylique ne doit cependant pas dépasser 50% en poids , de préférence elle est inférieure à 30% en poids, afin de conserver la viscosité du sirop.

La (les) substance(s) ignifugeante(s) peut en outre être associée(s) à au moins un autre additif ou charge qui permet de renforcer son efficacité ignifugeante. Le sirop (méth)acrylique peut donc comprendre de façon optionnelle au moins un autre additif ou charge, choisi par exemple dans la liste suivante:
- des additifs tels que la silice pyrogénée ou les argiles/bentonites;
- des charges inorganiques telles que le carbonate de magnésium, le carbonate de calcium, l'oxyde de magnésium, l'oxyde de calcium, l'hydrotalcite, le dihydrotalcite, l'hydroxyde de calcium, le talc (silicate de magnésium dihydroxylé), ou des oxydes métalliques, comme par exemple l'oxyde de zinc, l'oxyde d'aluminium, les oxydes de titane, le trioxyde d'antimoine, le tartrate d'antimoine.

Ces additifs ou charges gênent la diffusion des gaz combustibles issus de la pyrolyse lors d'un feu et permettent par conséquent d'améliorer la résistance au feu du matériau composite final et de renforcer l'efficacité de la (des) substance(s) ignifugeante(s) incorporée(s) dans le sirop (méth)acrylique.

Une charge n'est pas considérée comme un additif dans le cadre de la présente invention.

Afin de conserver une viscosité dynamique du sirop (méth)acrylique telle qu'elle permet une bonne imprégnation du substrat fibreux, et de conserver les propriétés thermoplastiques de la matrice obtenue après polymérisation du substrat fibreux pré-imprégné de sirop, les composés du sirop sont incorporés avec les pourcentages massiques suivantes :

Le monomère (méth)acrylique ou les monomères (méth)acryliques dans le sirop (méth)acrylique liquide sont présents dans des proportions comprises entre 40 et 80%, de préférence entre 40 et 70% en poids du sirop (méth)acrylique liquide total.

Le ou les polymères (méth) acryliques dans le sirop (méth)acrylique liquide sont présents à hauteur d'au moins 1 % en poids, de préférence d'au moins 5 %, avantageusement d'au moins 10 % en poids du sirop (méth)acrylique liquide total.

Le ou les polymères (méth) acryliques dans le sirop (méth)acrylique liquide sont présents à hauteur d'au plus 50 % en poids, de préférence d'au plus 35%, avantageusement d'au plus 20 % en poids du sirop (méth)acrylique liquide total.

En particulier, le sirop (méth)acrylique liquide comprend
a)de 5 % en poids à 20 % en poids d'un polymère (méth)acrylique,
b) de 40% en poids à 80 % en poids d'un monomère (méth)acrylique,
c) de 10 % en poids à 30% en poids d'un agent ignifugeant de formule (I) ou (II), et/ou
d) de 15 % en poids à 50 % en poids de trihydrate d'alumine.

Tous les additifs et toutes les charges sont ajoutés au sirop (méth)acrylique liquide avant l'imprégnation.

**S'agissant du procédé de fabrication du sirop (méth)acrylique liquide,** une première étape consiste à préparer un premier sirop comprenant le monomère (méth)acrylique ou mélange de monomères (méth)acrylique et un polymère (méth)acrylique. La ou les substances ignifugeantes sont ensuite ajoutées dans le premier sirop, dans les proportions indiquées ci-dessus pour conserver une viscosité dynamique comprise entre 10 mPa*s et 10 000 mPa*s, de préférence entre 50 mPa*s et 5 000 mPa*s et avantageusement entre 100 mPa*s et 1 000 mPa*s.

**En ce qui concerne le procédé d'imprégnation du substrat fibreux,** il comprend une étape d'imprégnation du substrat fibreux avec le sirop (méth)acrylique liquide. Cette étape d'imprégnation se fait dans un moule fermé.

Si la viscosité du sirop (méth)acrylique liquide à une température donnée est un peu trop élevée pour le procédé d'imprégnation, il est possible de chauffer le sirop afin d'avoir un sirop plus liquide pour le mouillage suffisant et l'imprégnation correcte et complète du substrat fibreux.

**S'agissant du substrat fibreux**, on peut mentionner les tissus, les feutres ou les non-tissés qui peuvent être sous la forme de bandes, de nappes, de tresses, de mèches ou de pièces. Le matériau fibreux peut avoir différentes formes et dimensions, monodimensionnelles, bidimensionnelles ou tridimensionnelles. Un substrat fibreux comprend un assemblage d'une ou de plusieurs fibres. Lorsque les fibres sont continues, leur assemblage forme des tissus.

La forme monodimensionnelle correspond à des fibres longues linéaires. Les fibres peuvent être discontinues ou continues. Les fibres peuvent être agencées de manière aléatoire ou en parallèle les unes aux autres sous la forme d'un filament continu. Une fibre est définie par son rapport de longueur, qui est le rapport entre la longueur et le diamètre de la fibre. Les fibres utilisées dans la présente invention sont des fibres longues ou des fibres continues. Les fibres ont un rapport de longueur d'au moins 1 000, de préférence d'au moins 1 500, de manière davantage préférée d'au moins 2 000, avantageusement d'au moins 3 000 et le plus avantageusement d'au moins 5 000, encore plus avantageusement d'au moins 6000, toujours plus avantageusement d'au moins 7500 et le plus avantageusement d'au moins 10 000.

La forme bidimensionnelle correspond à des mats fibreux ou des renforts non tissés ou tissés ou des faisceaux de fibres, qui peuvent également être tressés. Même si la forme bidimensionnelle a une certaine épaisseur et par conséquent a en principe une troisième dimension, elle est considérée comme bidimensionnelle selon la présente invention.

La forme tridimensionnelle correspond par exemple à des mats fibreux ou des renforts non tissés ou des faisceaux de fibres ou leurs mélanges, empilés ou pliés, un assemblage de la forme bidimensionnelle dans la troisième dimension.

Les origines du matériau fibreux peuvent être naturelles ou synthétiques. En tant que matériau naturel, on peut mentionner les fibres végétales, les fibres de bois, les fibres animales ou les fibres minérales.

Des fibres naturelles sont par exemple le sisal, le jute, le chanvre, le lin, le coton, les fibres de noix de coco et les fibres de banane. Des fibres animales sont par exemple la laine ou les cheveux.

En tant que matériau synthétique, on peut mentionner des fibres polymères choisies parmi les fibres de polymères thermodurcissables, de polymères thermoplastiques ou leurs mélanges.

Les fibres polymères peuvent être constituées de polyamide (aliphatique ou aromatique), de polyester, d'alcool polyvinylique, de polyoléfines, de polyuréthanes, de polychlorure de vinyle, de polyéthylène, de polyesters insaturés, de résines époxy et d'esters de vinyle.

Les fibres minérales peuvent également être choisies parmi les fibres de verre, notamment de type E, R ou S2, les fibres de carbone, les fibres de bore ou les fibres de silice.

Le substrat fibreux de la présente invention est choisi parmi les fibres végétales, les fibres de bois, les fibres animales, les fibres minérales, les fibres polymères synthétiques, les fibres de verre, les fibres de carbone ou leurs mélanges.

De préférence, le substrat fibreux est choisi parmi les fibres minérales.

Les fibres du substrat fibreux ont un diametre entre 0.005µm et 100µm, de préférence entre 1µm et 50µm, de manière davantage préférée entre 5µm et 30µm et avantageusement entre 10µm et 25µm.

De préférence les fibres du substrat fibreux de la présente invention sont choisies parmi les fibres continues (ce qui signifie que le facteur de forme n'est pas forcement applicable comme pour des fibres longues) pour la forme monodimensionnelle, ou pour des fibres longues ou continues pour la forme bidimensionnelle ou tridimensionnelle du substrat fibreux

Selon un aspect supplémentaire, l'invention concerne un matériau composite polymère comprenant une matrice (méth)acrylique thermoplastique et un substrat fibreux utilisé comme renfort, dans lequel le substrat fibreux est constitué de fibres longues, ledit matériau composite étant caractérisé en ce que la matrice (méth)acrylique thermoplastique est obtenue après polymérisation dudit substrat fibreux pré-imprégné dudit sirop (méth)acryique liquide.

Un autre aspect de la présente invention est un procédé de fabrication de pièces ou produits mécaniques ou structurés comprenant les étapes suivantes :
a) l'imprégnation d'un substrat fibreux avec le sirop (méth)acrylique liquide,
b) la polymérisation du sirop (méth)acrylique liquide imprégnant ledit substrat fibreux.

L'imprégnation du substrat fibreux à l'étape a) est de préférence réalisée dans un moule fermé.

Avantageusement, l'étape a) et l'étape b) sont réalisées dans le même moule fermé.

**En ce qui concerne le procédé de fabrication** de pièces composites, différents procédés pourraient être utilisés pour préparer des pièces. On peut mentionner l'infusion, le moulage en sac sous vide, le moulage en sac sous pression, le moulage en autoclave, le moulage par transfert de résine (RTM), le moulage par injection-réaction (RIM), le moulage par injection-réaction renforcé (R-RIM) et ses variantes, le moulage sous presse ou le moulage par compression.

Les procédés de fabrication préférés pour la fabrication de pièces composites sont des procédés selon lesquels le sirop (méth)acrylique liquide est transféré au substrat fibreux par imprégnation du substrat fibreux dans un moule, de manière davantage préférée dans un moule fermé.

Avantageusement, l'étape d'imprégnation du matériau fibreux est réalisée dans un moule fermé.

Le plus avantageusement, le procédé de fabrication de pièces composites est choisi parmi le moulage par transfert de résine ou l'infusion.

Tous les procédés comprennent l'étape d'imprégnation du substrat fibreux avec le sirop (méth)acrylique liquide avant l'étape de polymérisation dans un moule.

L'étape de polymérisation du sirop (méth)acrylique liquide imprégnant ledit substrat fibreux a lieu après l'étape d'imprégnation dans le même moule.

Le moulage par transfert de résine est un procédé utilisant un ensemble de moulage à deux côtés qui forme les deux surfaces d'un matériau composite. Le côté inférieur est un moule rigide. Le côté supérieur peut être un moule rigide ou flexible. Des moules flexibles peuvent être fabriqués à partir de matériaux composites, de silicone ou de films polymères extrudés tels que le nylon. Les deux côtés s'emboîtent pour former une cavité de moulage. La caractéristique distinctive du moulage par transfert de résine est que le substrat fibreux est placé dans cette cavité et que l'ensemble de moulage est fermé avant l'introduction du sirop (méth)acrylique liquide. Le moulage par transfert de résine comprend de nombreuses variétés qui diffèrent au niveau de la mécanique d'introduction du sirop (méth)acrylique liquide dans le substrat fibreux dans la cavité de moulage. Ces variations vont de l'infusion sous vide au moulage par transfert de résine sous vide (VARTM). Ce procédé peut être réalisé à température ambiante ou élevée.

Avec le procédé d'infusion, le sirop (méth)acrylique liquide doit avoir la viscosité adaptée pour ce procédé de préparation du matériau composite polymère. Le sirop (méth)acrylique liquide est aspiré dans le substrat fibreux présent dans un moule spécial par application d'un léger vide. Le substrat fibreux est infusé et complètement imprégné par le sirop (méth)acrylique liquide.

Un avantage de ce procédé est la grande quantité de matériau fibreux dans le composite.

En ce qui concerne l'utilisation des pièces mécaniques en matériau composite ainsi fabriquées, on peut mentionner les applications automobiles, les applications transport tels que le bus ou la camion, les applications nautiques, les applications ferroviaires, le sport, les applications aéronautiques et aérospatiales, les applications photovoltaïques, les applications informatiques, les applications pour la construction et le batiment, les applications pour les télécommunications et les applications pour l'énergie éolienne.

La pièce mécanique en matériau composite est notamment une pièce d'automobile, une pièce de bateau, une pièce de bus, une pièce de train, un article de sport, une pièce d'avion ou d'hélicoptère, une pièce de vaisseau spatial ou de fusée, une pièce de module photovoltaïque, un matériau pour la construction ou le bâtiment, une pièce d'éolienne, une pièce de meuble, une pièce de construction ou de bâtiment, une pièce de téléphone ou de téléphone portable, une pièce d'ordinateur ou de télévision, une pièce d'imprimante et de photocopieuse.

Les pièces mécaniques ou éléments structurels, obtenus après imprégnation d'un substrat fibreux avec le sirop (méth)acrylique et polymérisation, ont subi des tests de résistance au feu et présentent de bonnes propriétés, tel que cela est illustré par les exemples ci-dessous. Un avantage supplémentaire du matériau composite thermoplastique obtenu grâce à l'invention, réside dans le fait que la matrice (méth)acrylique soumise à un feu dégage moins de fumées toxiques qu'une résine phénolique, utilisée jusqu'à présent pour réaliser des matériaux composites thermodurcissables et qui dégage notamment du monoxyde de carbone. De plus les fumées dégagées par la combustion d'une résine (méth)acrylique sont beaucoup moins opaques que les fumées dégagées par la combustion de résines polyesters ou époxides.

Les pièces mécaniques ou éléments structurels en matériau composite obtenues après imprégnation d'un substrat fibreux avec le sirop (méth)acrylique et polymérisation possèdent un indice d'oxygène limite IOL supérieur à 32, préférablement supérieure à 40 et avantageusement supérieure à 45.

L'indice d'oxygène limite (IOL) est défini comme étant le pourcentage minimum d'oxygène dans un mélange oxygène-azote (N₂/O₂) pour qu'une combustion soutenue d'une éprouvette E soit observée (dimensions 40x10x3 mm³) dans les conditions d'essais spécifiées par la norme ISO 4589. L'IOL mesure donc la facilité avec laquelle un polymère peut s'enflammer au contact d'une flamme. Plus la valeur de l'IOL est élevée et moins le matériau a tendance à s'enflammer.

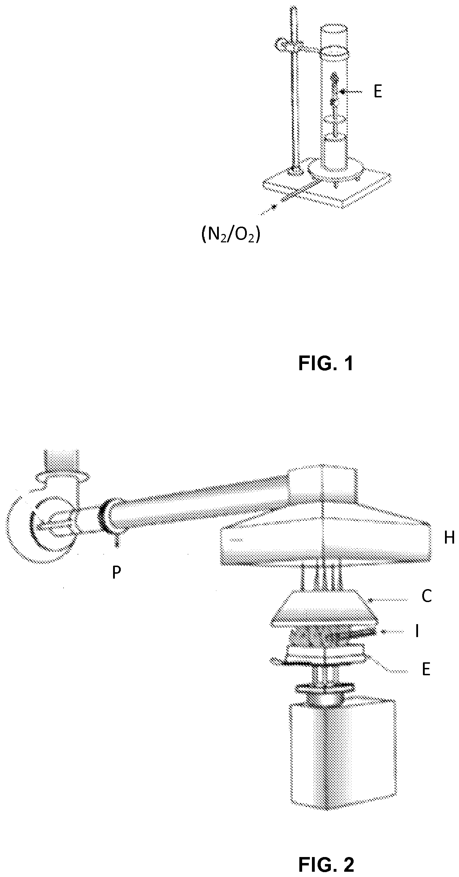

La Figure 1 représente le schéma de l'appareillage utilisé pour réaliser les mesures d'IOL.
Pour un IOL < 21, le matérieu est combustible, c'est le cas du PMMA avec une valeur d'IOL de 17,3.
Pour un IOL > 21, le matériau est auto-extinguible (ne brûle pas dans l'air).
Pour un IOL = 100, le matériau est totalement incombustible.

Le test du cône calorimètre a également été utilisé pour mesurer la résistance au feu des pièces composites réalisées selon l'invention. Ce test du cône calorimétrique est le plus important à l'échelle du laboratoire dans le domaine des tests au feu, car il mesure d'importantes propriétés dans des conditions se rapprochant de celles d'un feu réel, dans les conditions d'essais spécifiées par la norme ISO 5660. La Figure 2 représente un schéma du dispositif de cône calorimètre utilisé pour effectuer les tests.

Des plaques E de dimensions 100x100x3 mm³ sont exposées à un flux de chaleur pouvant aller jusqu'à 100 kW.m⁻² fourni par un cône chauffant C. La combustion est alors initiée par une étincelle I et est maintenue par l'action du cône chauffant C. L'évolution de la masse de l'échantillon est suivie tout au long de la combustion au moyen d'une balance, ce qui permet de déterminer la vitesse de perte de masse de l'échantillon MLR (acronyme anglais pour « Mass Loss Rate »). Les gaz libérés sont collectés par une hotte H, puis aspirés dans un conduit dans lequel un dispositif P de prélèvement et d'analyse des gaz dégagés permet de mesurer entre autres le débit gazeux et la concentration en oxygène. La méthode est basée sur l'observation empirique que la chaleur libérée est directement proportionnelle à la quantité d'oxygène consommée pendant la combustion. Pour la matière organique, 1 kg d'oxygène consommé correspond à une libération de chaleur de 13,1.10³ kJ. La mesure de la concentration en oxygène dans le conduit d'évacuation et le débit gazeux permettent ainsi de déterminer la vitesse de consommation d'oxygène ainsi que le débit calorifique HRR (acronyme anglais pour « Heat Release Rate »).

L'intégration de la courbe exprimant l'évolution de HRR en fonction du temps donne la quantité totale de chaleur dégagés : THR (acronyme anglais pour « Total Heat Released ») exprimée en kJ.m⁻². Le maximum du débit calorifique ou pic de débit calorifique (pHRR) est un paramètre représentatif d'un feu, car il permet de définir sa capacité de propagation. D'autres paramètres sont mesurés tels que le temps d'ignition TTI (acronyme anglais pour « Time to ignition ») caractérisant la facilité d'inflammation du matériau, le temps d'extinction TOF (acronyme anglais pour « Time of flame-out »), les quantités de CO et de CO₂ dégagés, la vitesse de libération des fumées, etc...

Pour définir des propriétés retardatrices de flamme intéressantes, il faut que pHRR et THR soient les plus faibles possibles, que TTI et TOF soient les plus grands possibles. Le taux de fumées et les quantités de CO et CO₂ doivent également être les plus faibles possibles.

### [Exemples]

### Exemple 1 (selon l'invention): fabrication d'un composite thermoplastique à base d'un sirop (méth)acrylique comprenant des additifs dérivés phosporés.

### 1^{ère} étape : préparation du sirop (méth)acrylique

Un sirop est préparé par dissolution de 10% en poids du PMMA (BS520 un copolymère de MMA comprenant de l'acrylate d'éthyle en tant que comonomère) dans 90% en poids de méthacrylate de méthyle, qui est stabilisé avec du MEHQ (éther monométhylique d'hydroquinone).

Un phosphinate OP930 de la société Clariant présentant un diamètre D50 de 2,5 µm est incorporé dans le sirop (meth)acrylique, de telle sorte que les proportions en polymère (meth)acrylique, en monomère (meth)acrylique et phosphinate dans le sirop sont les suivantes : 8% de polymère (méthacrylique), 72% de méthacrylate de méthyle et 20% d'OP930.

Aux 100 parts en poids du sirop, sont rajoutés 1 part en poids de peroxyde de benzoyle (BPO - Luperox A75 de la société Arkema).

### 2^{ème} étape : imprégnation d'un substrat fibreux et polymérisation

L'échantillon a été réalisé avec un tissu taffetas en fibre de verre 600T de la société Chomarat, de masse surfacique 600 g/m² +/- 5%. Le procédé de mise en oeuvre est de l'imprégnation manuelle suivie d'une compression par le vide, plus communément appelé Compression Voie Humide.

Cette technique consiste à imprégner manuellement chaque couche de la pièce. Une fois toutes les couches imprégnées, un tissu absorbant est placé sur le tissu de délaminage, afin d'absorber le surplus de résine sortant de la pièce lorsque celle-ci est compactée par le vide (500 mBar).

Pour l'étape de drapage, on étale de la résine sur le moule au pinceau puis on dépose le premier plis de renfort. On redépose ensuite de la résine sur le plis et on applique le rouleau débulleur. On répête ensuite l'opération pour les 8 autres plis. On positionne ensuite le tissu de délaminage et on recouvre l'ensemble d'une bâche à vide. On tire le vide à 500 mBar absolu puis on chauffe le tout à 80°C pendant 4h avant de refroidir à température ambiante pour démouler.

L'Indice d'Oxygène Limite (IOL) de l'échantillon est de 55, 6.

La valeur de pHRR est de 187 kW/m², le THR est de 21 MJ/m², le TTI est de 28 secondes, le TOF est de 275 secondes et le TOF-TTI est de 247 secondes

### Example 2 (hors invention)

### 1^{ère} étape : préparation du sirop (méth)acrylique

Un sirop est préparé par dissolution de 25% en poids du PMMA (BS520 un copolymère de MMA comprenant de l'acrylate d'éthyle en tant que comonomère) dans 75% en poids de méthacrylate de méthyle, qui est stabilisé avec du MEHQ (éther monométhylique d'hydroquinone).

Aux 100 parts en poids du sirop, sont rajoutés 1 part en poids de peroxyde de benzoyle (BPO - Luperox A75 de la société Arkema)

### 2^{ème} étape imprégnation d'un substrat fibreux et polymérisation

L'échantillon a été réalisé avec un tissu taffetas en fibre de verre 600T de la société Chomarat, de masse surfacique 600 g/m² +/- 5%. Le procédé de mise en oeuvre est de l'imprégnation manuelle suivie d'une compression par le vide, plus communément appelé Compression Voie Humide.

Cette technique consiste à imprégner manuellement chaque couche de la pièce. Une fois toutes les couches imprégnées, un tissu absorbant est placé sur le tissu de délaminage, afin d'absorber le surplus de résine sortant de la pièce lorsque celle-ci est compactée par le vide (500 mBar).

Pour l'étape de drapage, on étale de la résine sur le moule au pinceau puis on dépose le premier plis de renfort. On redépose ensuite de la résine sur le plis et on applique le rouleau débulleur. On répête ensuite l'opération pour les 8 autres plis. On positionne ensuite le tissu de délaminage et on recouvre l'ensemble d'une bâche à vide. On tire le vide à 500 mBar absolu puis on chauffe le tout à 80°C pendant 4h avant de refroidir à température ambiante pour démouler.

L'Indice d'Oxygène Limite (IOL) de l'échantillon est de 23.

La valeur de pHRR est de 820 kW/m², le THR est de 90 MJ/m², le TTI est de 40 secondes, le TOF est de 225 secondes et le TTOF-TI est de 180 secondes

## Revendications

1. Sirop (meth)acrylique liquide d'imprégnation d'un substrat fibreux, ledit substrat fibreux étant constitué de fibres longues, ledit sirop étant **caractérisé en ce qu'**il comprend :
a)un polymère (méth)acrylique,
b)un monomère (méth)acrylique,
c) au moins une substance ignifugeante choisie parmi :
• des additifs dérivés phosphorés tels que des phosphinates, des diphosphinates, des phosphonates, des phosphates, du phosphore rouge, des polyphophates d'ammonium ayant un nombre de motifs n d'au moins 1000,
• des charges minérales hydratées telles que des hydroxydes métalliques,
la teneur globale en substance ignifugeante dans ledit sirop (méth)acrylique liquide étant inférieure à 50 % en poids, de préférence inférieure à 30 %, ledit sirop (méth)acrylique liquide ayant une viscosité dynamique comprise entre 10 mPa*s et 10 000 mPa*s, de préférence entre 50 mPa*s et 5 000 mPa*s et avantageusement entre 100 mPa*s et 1 000 mPa*s, comme mesuré avec un rhéomètre ou un viscosimètre à 25°C.

2. Sirop (meth)acrylique liquide selon la revendication 1, **caractérisé en ce que** les dérivés phosphorés sont de préférence choisis parmi les phosphinates ou diphosphinates présentant une formule (I) ou (II) : 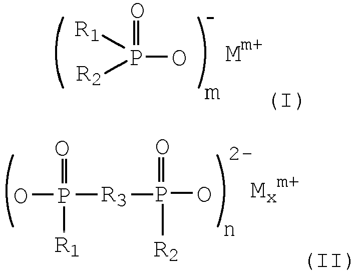 dans lesquelles :
R₁ et R₂ désignent des groupements alkyle en C₁-C₆, linéaires ou branchés et/ou aryle ;
R₃ désigne un groupement alkylène en C₁-C₁₀, linéaire ou branché, arylène en C₆-C₁₀, alkylarylène ou arylalkylène ;
M désigne Mg, Ca, Al, Sb, Sn, Ge, Ti, Zn, Fe, Zr, Ce, Bi, Sr, Mn, Li, Na, K ;
m est un entier entre 1 et 4 ;
n est un entier entre 1 et 4 ;
x est un entier entre 1 et 4.

3. Sirop (meth)acrylique liquide selon la revendication 2, **caractérisé en ce que** R₁ et R₂ sont groupements méthyle, éthyle, n-propyle, isopropyle, n-butyle, tert-butyle, n-pentyle et/ou phényle.

4. Sirop (meth)acrylique liquide selon la revendication 2, **caractérisé en ce que** R₃ est le groupement méthylène, éthylène, n-propylène, isopropylène, n-butylène, tert-butylène, n-pentylène, n-octylène ou n-docécylène ; ou le groupement phénylène, méthylphénylène, éthylphénylène, tert-butylphénylène, méthylnaphtylène, phényléthylène, phényléthylène, phénylpropylène ou naphtalène.

5. Sirop (meth)acrylique liquide selon la revendication 2, **caractérisé en ce que** l'additif ignifugeant est de formule (I) et M désigne Al et R₁ et R₂ désignent tous deux un groupement alkyle en C₁-C₆.

6. Sirop (meth)acrylique liquide selon la revendication 5, **caractérisé en ce que** l' additif ignifugeant a la formule (III) ou (IV) :

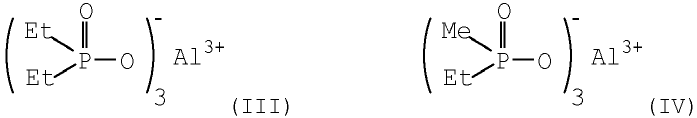

7. Sirop (meth)acrylique liquide selon l'une des revendications 2 à 6, **caractérisé en ce que** ledit additif ignifugeant de formule (I) ou (II) représente de 5% à 50% en poids, de préférence de 10% à 30% en poids, et avantageusement de 15% à 25% en poids du sirop (méth)acrylique.

8. Sirop (meth)acrylique liquide selon la revendication 1, **caractérisé en ce que** les charges minérales hydratées sont constituées par du trihydrate d'alumine ou de l'hydroxyde de magnésium.

9. Sirop (meth)acrylique liquide selon la revendication 8, **caractérisé en ce que** les charges minérales hydratées sont de préférence constituées par du trihydrate d'alumine.

10. Sirop (meth)acrylique liquide selon l'une des revendications 8 à 9, **caractérisé en ce que** les charges minérales hydraté représentent de 5% à 50% en poids, de préférence de 10% à 50% en poids, et avantageusement de 30% à 50% en poids du sirop (méth)acrylique.

11. Sirop (meth)acrylique liquide selon l'une des revendications 1 à 10, **caractérisé en ce que** la (les) substance(s) ignifugeante(s) se présente(nt) sous forme de particules dont le diamètre moyen D₅₀, mesuré par granulométrie à diffraction laser comme défini dans la description, est compris entre 0,5 et 10 µm, avantageusement entre 1 et 5 µm.

12. Sirop (meth)acrylique liquide selon l'une des revendications 1 à 11, **caractérisé en ce qu'**il comprend en outre des additifs tels que la silice pyrogénée ou des argiles/bentonites; et/ou des charges inorganiques telles que le carbonate de magnésium, le carbonate de calcium, l'oxyde de magnésium, l'oxyde de calcium, l'hydrotalcite, le dihydrotalcite, l'hydroxyde de calcium, le talc (silicate de magnésium dihydroxylé), ou des oxydes métalliques comme l'oxyde de zinc, l'oxyde d'aluminium, les oxydes de titane, le trioxyde d'antimoine, le tartrate d'antimoine qui permettent de renforcer l'efficacité de la substance ignifugeante.

13. Sirop (meth)acrylique liquide selon la revendication 1, **caractérisé en ce que** le polymère (méth)acrylique est un homo- ou copolymère de méthacrylate de méthyle (MMA) ou un de leurs mélanges.

14. Sirop (meth)acrylique liquide selon la revendication 1, **caractérisé en ce que** le monomère (méth)acrylique est choisi parmi l'acide acrylique, l'acide méthacrylique, les monomères acryliques d'alkyle, les monomères méthacryliques d'alkyle et leurs mélanges, le groupe alkyle contenant de 1 à 22 carbones, linéaires, ramifiés ou cycliques ; le groupe alkyle contenant de préférence 1 à 12 carbones, linéaires, ramifiés ou cycliques.

15. Sirop (meth)acrylique liquide selon l'une quelconque des revendications précédentes, **caractérisé en ce que** le sirop (méth)acrylique liquide comprend :
a)de 5 % en poids à 20 % en poids d'un polymère (méth)acrylique,
b) de 40% en poids à 80 % en poids d'un monomère (méth)acrylique,
c) de 10 % en poids à 30% en poids d'un agent ignifugeant de formule (I) ou (II), et/ou
d) de 15 % en poids à 50 % en poids de trihydrate d'alumine.

16. Procédé d'imprégnation pour l'imprégnation d'un substrat fibreux, ledit substrat fibreux étant constitué de fibres longues et ledit procédé comprenant une étape d'imprégnation dudit substrat fibreux avec ledit sirop (méth)acrylique selon l'une des revendications 1 à 15.

17. Matériau composite polymère comprenant une matrice (méth)acrylique thermoplastique et un substrat fibreux utilisé comme renfort, dans lequel le substrat fibreux est constitué de fibres longues, ledit matériau composite étant **caractérisé en ce que** la matrice (méth)acrylique thermoplastique est obtenue après polymérisation dudit substrat fibreux pré-imprégné dudit sirop (méth)acryique liquide selon l'une quelconque des revendications 1 à 15.

18. Procédé de fabrication de pièces mécaniques ou éléments structurels en matériau composite, comprenant les étapes suivantes :
a) l'imprégnation d'un substrat fibreux avec un sirop (méth)acrylique liquide selon l'une quelconque des revendications 1 à 15,
b) la polymérisation du sirop (méth)acrylique liquide imprégnant ledit substrat fibreux.

19. Procédé de fabrication selon la revendication 18, **caractérisé en ce que** le procédé est choisi parmi le moulage par transfert de résine ou l'infusion.

20. Pièce mécanique ou élément structurel en matériau composite selon la revendication 17, ou obtenue par le procédé de fabrication selon les revendications 18 à 19.

21. Pièce selon la revendication 20, ladite pièce étant une pièce d'automobile, une pièce de bateau, une pièce de train, un article de sport, une pièce d'avion ou d'hélicoptère, une pièce de vaisseau spatial ou de fusée, une pièce de module photovoltaïque, une pièce d'éolienne, une pièce de meuble, une pièce de construction ou de bâtiment, une pièce de téléphone ou de téléphone portable, une pièce d'ordinateur ou de télévision, une pièce d'imprimante et de photocopieuse.

## Patentansprüche

1. Flüssiger (Meth)acrylsirup zum Imprägnieren eines Fasersubstrats, wobei das Fasersubstrat aus langen Fasern besteht, wobei der Sirup **dadurch gekennzeichnet ist, dass** er Folgendes umfasst:
a) ein (Meth)acryl-Polymer,
b) ein (Meth)acryl-Monomer,
c) mindestens eine Flammschutzsubstanz, ausgewählt aus:
• Phosphorderivat-Additiven wie Phosphinaten, Diphosphinaten, Phosphonaten, Phosphaten, rotem Phosphor, Ammoniumpolyphosphaten mit einer Zahl von Einheiten n von mindestens 1000,
• hydratisierten Mineralfüllstoffen wie Metallhydroxiden,
wobei die Gesamtmenge an Flammschutzsubstanz in dem flüssigen (Meth)acrylsirup weniger als 50 Gew.-%, vorzugsweise weniger als 30 Gew.-% beträgt, wobei der flüssige (Meth)acrylsirup eine mit einem Rheometer oder einem Viskosimeter bei 25°C gemessene dynamische Viskosität zwischen 10 mPa*s und 10.000 mPa*s, vorzugsweise zwischen 50 mPa*s und 5000 mPa*s und vorteilhafterweise zwischen 100 mPa*s und 1000 mPa*s aufweist.

2. Flüssiger (Meth)acrylsirup nach Anspruch 1, **dadurch gekennzeichnet, dass** die Phosphorderivate vorzugsweise aus Phosphinaten oder Diphosphinaten der Formel (I) oder (II) ausgewählt sind: 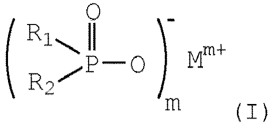 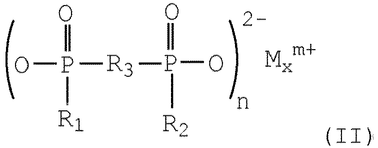 in denen:
R₁ und R₂ für eine lineare oder verzweigte C₁-C₆-Alkyl- und/oder Arylgruppe stehen;
R₃ für eine lineare oder verzweigte C₁-C₁₀-Alkylen-, C₆-C₁₀-Arylen-, Alkylarylen- oder Arylalkylengruppe steht;
M für Mg, Ca, Al, Sb, Sn, Ge, Ti, Zn, Fe, Zr, Ce, Bi, Sr, Mn, Li, Na oder K steht;
m für eine ganze Zahl zwischen 1 und 4 steht;
n für eine ganze Zahl zwischen 1 und 4 steht;
x für eine ganze Zahl zwischen 1 und 4 steht.

3. Flüssiger (Meth)acrylsirup nach Anspruch 2, **dadurch gekennzeichnet, dass** R₁ und R₂ für Methyl-, Ethyl-, n-Propyl-, Isopropyl-, n-Butyl-, tert-Butyl-, n-Pentyl- und/oder Phenylgruppen stehen.

4. Flüssiger (Meth)acrylsirup nach Anspruch 2, **dadurch gekennzeichnet, dass** R₃ für eine Methylen-, Ethylen-, n-Propylen-, Isopropylen-, n-Butylen-, tert-Butylen-, n-Pentylen-, n-Octylen- oder n-Dodecylengruppe oder eine Phenylen-, Methylphenylen-, Ethylphenylen-, tert-Butylphenylen-, Methylnaphthylen-, Phenylethylen-, Phenylethylen-, Phenylpropylen- oder Naphthalingruppe steht.

5. Flüssiger (Meth)acrylsirup nach Anspruch 2, **dadurch gekennzeichnet, dass** das Flammschutzadditiv die Formel (I) aufweist und M für Al steht und R₁ und R₂ beide für eine C₁-C₆-Alkylgruppe stehen.

6. Flüssiger (Meth)acrylsirup nach Anspruch 5, **dadurch gekennzeichnet, dass** das Flammschutzadditiv die Formel (III) oder (IV) aufweist:

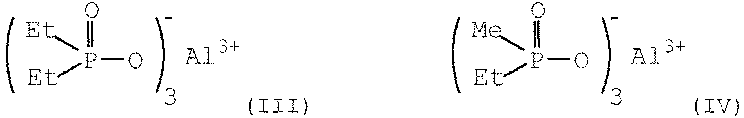

7. Flüssiger (Meth)acrylsirup nach einem der Ansprüche 2 bis 6, **dadurch gekennzeichnet, dass** das Flammschutzadditiv der Formel (I) oder (II) 5 bis 50 Gew.-%, vorzugsweise 10 bis 30 Gew.-% und vorteilhafterweise 15 bis 25 Gew.-% des (Meth)acrylsirups ausmacht.

8. Flüssiger (Meth)acrylsirup nach Anspruch 1, **dadurch gekennzeichnet, dass** die hydratisierten Mineralfüllstoffe aus Aluminiumtrihydrat oder Magnesiumhydroxid bestehen.

9. Flüssiger (Meth)acrylsirup nach Anspruch 8, **dadurch gekennzeichnet, dass** die hydratisierten Mineralfüllstoffe vorzugsweise aus Aluminiumtrihydrat bestehen.

10. Flüssiger (Meth)acrylsirup nach einem der Ansprüche 8 bis 9, **dadurch gekennzeichnet, dass** die hydratisierten Mineralfüllstoffe 5 bis 50 Gew.-%, vorzugsweise 10 bis 50 Gew.-% und vorteilhafterweise 30 bis 50 Gew.-% des (Meth)acrylsirups ausmachen.

11. Flüssiger (Meth)acrylsirup nach einem der Ansprüche 1 bis 10, **dadurch gekennzeichnet, dass** die Flammschutzsubstanz bzw. die Flammschutzsubstanzen in Form von Teilchen mit einem durch Teilchengrößenbestimmung mittels Laserbeugung wie in der Beschreibung definiert gemessenen mittleren Durchmesser D₅₀ zwischen 0,5 und 10 µm und vorteilhafterweise zwischen 1 und 5 µm vorliegt bzw. vorliegen.

12. Flüssiger (Meth)acrylsirup nach einem der Ansprüche 1 bis 11, **dadurch gekennzeichnet, dass** er außerdem Additive wie pyrogenes Siliciumdioxid oder Tone/Bentonite und/oder anorganische Füllstoffe wie Magnesiumcarbonat, Calciumcarbonat, Magnesiumoxid, Calciumoxid, Hydrotalcit, Dihydrotalcit, Calciumhydroxid, Talk (dihydroxyliertes Magnesiumsilicat) oder Metalloxide wie Zinkoxid, Aluminiumoxid, Titandioxide oder Antimontrioxid oder Antimontartrat, die eine Erhöhung der Wirksamkeit der Flammschutzsubstanz ermöglichen, umfasst.

13. Flüssiger (Meth)acrylsirup nach Anspruch 1, **dadurch gekennzeichnet, dass** es sich bei dem (Meth)acrylPolymer um ein Homo- oder Copolymer von Methylmethacrylat (MMA) oder eine Mischung davon handelt.

14. Flüssiger (Meth)acrylsirup nach Anspruch 1, **dadurch gekennzeichnet, dass** das (Meth)acryl-Monomer aus Acrylsäure, Methacrylsäure, Alkylacrylsäure-Monomeren, Alkylmethacrylsäure-Monomeren und Mischungen davon ausgewählt ist, wobei die Alkylgruppe 1 bis 22 lineare, verzweigte oder cyclische Kohlenstoffatome enthält, wobei die Alkylgruppe vorzugsweise 1 bis 12 lineare, verzweigte oder cyclische Kohlenstoffatome enthält.

15. Flüssiger (Meth)acrylsirup nach einem der vorhergehenden Ansprüche, **dadurch gekennzeichnet, dass** der flüssige (Meth)acrylsirup Folgendes umfasst:
a) 5 Gew.-% bis 20 Gew.-% eines (Meth)acrylPolymers,
b) 40 Gew.-% bis 80 Gew.-% eines (Meth)acryl-Monomers,
c) 10 Gew.-% bis 30 Gew.-% eines Flammschutzmittels der Formel (I) oder (II) und/oder
d) 15 Gew.-% bis 50 Gew.-% Aluminiumtrihydrat.

16. Imprägnierungsverfahren zum Imprägnieren eines Fasersubstrats, wobei das Fasersubstrat aus langen Fasern besteht und das Verfahren einen Schritt des Imprägnierens des Fasersubstrats mit dem (Meth)acrylsirup nach einem der Ansprüche 1 bis 15 umfasst.

17. Polymerverbundwerkstoff, umfassend eine thermoplastische (Meth)acrylmatrix und ein als Verstärkung verwendetes Fasersubstrat, wobei das Fasersubstrat aus langen Fasern besteht, wobei der Verbundwerkstoff **dadurch gekennzeichnet ist, dass** die thermoplastische (Meth)acrylmatrix nach Polymerisation des mit dem flüssigen (Meth)acrylsirup nach einem der Ansprüche 1 bis 15 vorimprägnierten Fasersubstrats erhalten wird.

18. Verfahren zur Herstellung von mechanischen Teilen oder Bauelementen aus Verbundwerkstoff, das folgende Schritte umfasst:
a) Imprägnieren eines Fasersubstrats mit einem flüssigen (Meth)acrylsirup nach einem der Ansprüche 1 bis 15,
b) Polymerisieren des das Fasersubstrat imprägnierenden flüssigen (Meth)acrylsirups.

19. Herstellungsverfahren nach Anspruch 18, **dadurch gekennzeichnet, dass** das Verfahren aus Resin Transfer Molding oder Infusion ausgewählt wird.

20. Mechanisches Teil oder Bauelement aus Verbundwerkstoff nach Anspruch 17, oder erhalten durch das Herstellungsverfahren nach den Ansprüchen 18 bis 19.

21. Teil nach Anspruch 20, wobei es sich bei dem Teil um ein Automobilteil, ein Bootsteil, ein Zugteil, einen Sportartikel, ein Flugzeug- oder Hubschrauberteil, ein Raumschiff- oder Raketenteil, ein Photovoltaikmodulteil, ein Windturbinenteil, ein Möbelteil, ein Konstruktions- oder Gebäudeteil, ein Telefon- oder Mobiltelefonteil, ein Computer- oder Fernseherteil, ein Druckerteil und ein Fotokopiererteil handelt.

## Claims

1. Liquid (meth)acrylic syrup for impregnating a fibrous substrate, said fibrous substrate consisting of long fibres, said syrup being **characterized in that** it comprises:
a) a (meth)acrylic polymer,
b) a (meth)acrylic monomer,
c) at least one flame-retardant substance chosen from:
• phosphorus-based additives such as phosphinates, diphosphinates, phosphonates, phosphates, red phosphorus, ammonium polyphosphates with a number of units n of at least 1000,
• hydrated mineral fillers such as metal hydroxides,
the overall content of flame-retardant substance in said liquid (meth)acrylic syrup being less than 50% by weight, preferably less than 30%, said liquid (meth)acrylic syrup having a dynamic viscosity of between 10 mPa.s and 10 000 mPa.s, preferably between 50 mPa.s and 5000 mPa.s and advantageously between 100 mPa.s and 1000 mPa.s, as measured with a rheometer or a viscometer at 25°C.

2. Liquid (meth)acrylic syrup according to Claim 1, **characterized in that** the phosphorus derivatives are preferably chosen from phosphinates or diphosphinates of formula (I) or (II): 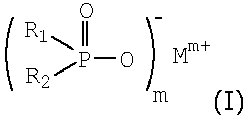 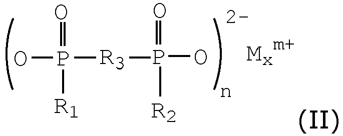 in which:
R₁ and R₂ denote linear or branched C₁-C₆ alkyl and/or aryl groups;
R₃ denotes a linear or branched C₁-C₁₀ alkylene, C₆-C₁₀ arylene, alkylarylene or arylalkylene group;
M denotes Mg, Ca, Al, Sb, Sn, Ge, Ti, Zn, Fe, Zr, Ce, Bi, Sr, Mn, Li, Na or K;
m is an integer between 1 and 4;
n is an integer between 1 and 4;
x is an integer between 1 and 4.

3. Liquid (meth)acrylic syrup according to Claim 2, **characterized in that** R₁ and R₂ are methyl, ethyl, n-propyl, isopropyl, n-butyl, tert-butyl, n-pentyl and/or phenyl groups.

4. Liquid (meth)acrylic syrup according to Claim 2, **characterized in that** R₃ is a methylene, ethylene, n-propylene, isopropylene, n-butylene, tert-butylene, n-pentylene, n-octylene or n-dodecylene group; or a phenylene, methylphenylene, ethylphenylene, tert-butylphenylene, methylnaphthylene, phenylethylene, phenylethylene, phenylpropylene or naphthalene group.

5. Liquid (meth)acrylic syrup according to Claim 2, **characterized in that** the flame-retardant additive is of formula (I) and M denotes Al and R₁ and R₂ both denote a C₁-C₆ alkyl group.

6. Liquid (meth)acrylic syrup according to Claim 5, **characterized in that** the flame-retardant additive has the formula (III) or (IV):

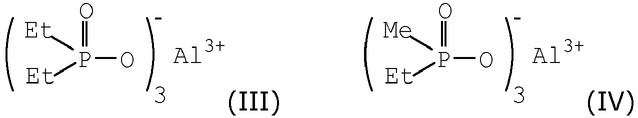

7. Liquid (meth)acrylic syrup according to one of Claims 2 to 6, **characterized in that** said flame-retardant additive of formula (I) or (II) represents from 5% to 50% by weight, preferably from 10% to 30% by weight and advantageously from 15% to 25% by weight of the (meth)acrylic syrup.

8. Liquid (meth)acrylic syrup according to Claim 1, **characterized in that** the hydrated mineral fillers consist of alumina trihydrate or magnesium hydroxide.

9. Liquid (meth)acrylic syrup according to Claim 8, **characterized in that** the hydrated mineral fillers preferably consist of alumina trihydrate.

10. Liquid (meth)acrylic syrup according to either of Claims 8 and 9, **characterized in that** the hydrated mineral fillers represent from 5% to 50% by weight, preferably from 10% to 50% by weight and advantageously from 30% to 50% by weight of the (meth)acrylic syrup.

11. Liquid (meth)acrylic syrup according to one of Claims 1 to 10, **characterized in that** the flame-retardant substance(s) are in the form of particles whose mean diameter D₅₀, measured by laser scattering particle size analysis as defined in the description, is between 0.5 and 10 µm and advantageously between 1 and 5 µm.

12. Liquid (meth)acrylic syrup according to one of Claims 1 to 11, **characterized in that** it also comprises additives such as fumed silica or clays/bentonites; and/or inorganic fillers such as magnesium carbonate, calcium carbonate, magnesium oxide, calcium oxide, hydrotalcite, dihydrotalcite, calcium hydroxide, talc (dihydroxylated magnesium silicate), or metal oxides such as zinc oxide, aluminium oxide, titanium oxides or antimony trioxide, or antimony tartrate, which make it possible to reinforce the efficacy of the flame-retardant substance.

13. Liquid (meth)acrylic syrup according to Claim 1, **characterized in that** the (meth)acrylic polymer is a homo- or copolymer of methyl methacrylate (MMA) or a mixture thereof.

14. Liquid (meth)acrylic syrup according to Claim 1, **characterized in that** the (meth)acrylic monomer is chosen from acrylic acid, methacrylic acid, alkyl acrylic monomers and alkyl methacrylic monomers, and mixtures thereof, the alkyl group containing from 1 to 22 linear, branched or cyclic carbons; the alkyl group preferably containing 1 to 12 linear, branched or cyclic carbons.

15. Liquid (meth)acrylic syrup according to any one of the preceding claims, **characterized in that** the liquid (meth)acrylic syrup comprises:
a) from 5% by weight to 20% by weight of a (meth)acrylic polymer,
b) from 40% by weight to 80% by weight of a (meth)acrylic monomer,
c) from 10% by weight to 30% by weight of a flame-retardant agent of formula (I) or (II), and/or
d) from 15% by weight to 50% by weight of alumina trihydrate.

16. Impregnation process for impregnating a fibrous substrate, said fibrous substrate consisting of long fibres and said process comprising a step of impregnating said fibrous substrate with said (meth)acrylic syrup according to one of Claims 1 to 15.

17. Polymeric composite material comprising a thermoplastic (meth)acrylic matrix and a fibrous substrate used as reinforcement, in which the fibrous substrate consists of long fibres, said composite material being **characterized in that** the thermoplastic (meth)acrylic matrix is obtained after polymerization of said fibrous substrate preimpregnated with said liquid (meth)acrylic syrup according to any one of Claims 1 to 15.

18. Process for manufacturing mechanical parts or structural elements made of composite material, comprising the following steps:
a) impregnating a fibrous substrate with a liquid (meth)acrylic syrup according to any one of Claims 1 to 15,
b) polymerizing the liquid (meth)acrylic syrup impregnating said fibrous substrate.

19. Manufacturing process according to Claim 18, **characterized in that** the process is chosen from resin transfer moulding and infusion.

20. Mechanical part or structural element made of composite material according to Claim 17, or obtained via the manufacturing process according to Claims 18 to 19.

21. Part according to Claim 20, said part being a motor vehicle part, a boat part, a train part, a sport article, an aeroplane or helicopter part, a space ship or rocket part, a photovoltaic module part, a wind turbine part, a furniture part, a construction or building part, a telephone or mobile phone part, a computer or television part, a printer and photocopier part.
